# EUROPEAN PATENT APPLICATION

(11) **EP 4 425 188 A1**
(43) Date of publication of application: **04.09.2024**
(21) Application number: 23160220.2
(22) Date of filing: 06.03.2023
(51) Int. Cl.: G01P 1/12, B66C 1/00, G01P 1/14, G01P 1/16, G01P 15/04, G01P 15/06, G01P 15/08

(54) **METHOD AND SYSTEM TO DETECT REPEATABLE IMPACTS TO THE CORNERS OF THE CONTAINERS BY CRANE SPREADER HOOKING MECHANISM**

(30) Priority: 01.03.2023 LT 2023509
(71) Applicant: Klaipedos Universitetas, 92294 Klaipeda (LT)
(72) Inventor: Eglynas, Tomas, 92331 Klaipeda (LT); Jakovlev, Sergej, 92331 Klaipeda (LT); Jusis, Mindaugas, 92331 Klaipeda (LT); Voznak, Miroslav, 738 01 Frydek-Mistek (CZ); Partila, Pavol, 08213 Demjata (SK); Tovarek, Jaromir, 779 00 Olomouc (CZ); Jankunas, Valdas, 92341 Klaipeda (LT)
(74) Representative: Zaboliene, Reda

(57) **Abstract**

A method for detecting repeated mechanical impacts on a container during regular hooking procedures by a quay crane operator. The method uses a monitoring system that receives signals from a sensor and digital gyroscope to monitor the acceleration of the spreader mechanism and its normal operational position in a 3D environment. The acceleration signal is then converted and filtered based on operational instructions stored in the memory module to detect patterns of sudden changes in the spreader's acceleration during the container hooking phase. The method can detect initial faulty impacts and store information about the number, acceleration, and timestamps of impacts in the memory module. The monitoring system's UI and server components are responsible for making operational decisions based on the information. The system includes a control unit, processor, and memory module to perform computational tasks and execute instructions stored in the memory component. The method also includes detecting repeated impacts by filtering the acceleration signal, selecting potential secondary impacts, and determining the presence of secondary impacts.

## Description

### TECHNICAL FIELD

The invention relates to a method and system for detecting impacts to the (upper) corners of the containers by crane spreader hooking mechanism.

### DESCRIPTION OF THE RELATED ART

As the demand for containerized cargo transportation continues to rise, the volume and throughput of container ports have seen a corresponding increase. However, this increased volume has also led to an increase in the number of damages sustained by containers during handling. One common cause of damage is the hooking process, in which a quay crane operator uses a spreader to attach and move containers. If the operator is unable to successfully hook the container on the first attempt, it can result in holes being punctured in the container walls. These damages can cause delays in cargo handling and result in financial losses for the shipping company. Thus, there is a need for the method and the system for detecting unwanted repeated mechanical impacts to a container.

The patent document CN115222697A (published on 21 October 2022) provides a method for detecting damage to containers using machine vision and deep learning. It involves collecting image data of the surface of a container from multiple angles and feeding it into a trained neural network model to extract information about the presence and location of damage. The method involves preprocessing the image data to enhance resolution and applying non-maximum suppression to the output in order to obtain the final damage information. However, the use of complex technologies such as machine vision and deep learning introduce drawbacks, including the need for specialized knowledge and resources to implement and maintain the systems, as well as increased complexity and cost.

An alternative method of detecting damage on containers is described in patent document Nr. WO2014104567A1 (published on 3 July 2014) whereby an intrusion-detecting and security system on external wall surface of container is provided. The system includes container tag for measuring an internal environment of each container, monitoring any abnormalities of the container, and transmitting management information including a monitoring result and a unique IP to a relay device. It is installed in a transportation means for transporting the container and receiving its management and location information from the tag. Nevertheless, the following system only records some of the impacts to the container and therefore from the collected data will not sense unwanted repeated mechanical impacts.

In US10611545B2 (published on 7 April 2020), invention relates to a shock detection system for a container that is used in intermodal freight transport. The system includes a force sensor that receives a force signal representing an amount of impact force applied to the container and a modem control unit that processes the force signal to determine a shock intensity, a shock severity, and an average shock severity based on a plurality of shock severity values. The modem control unit also determines an absolute value indicator and an average absolute value indicator based on the shock severity and average shock severity values and the bias value. The modem control unit uses these values to determine the presence of excessive mechanical shock. The system and method are designed to detect harmonic vibrations and/or external forces that can cause a load within the container to move and potentially damage the freight during intermodal transport. However, the following system is not designed and optimized to detect repeated hooking activity and will not accurately sense, whether the damage occurred during the attaching process.

The patent document JP2005030826A (published on 3 February 2005) discloses a system for detecting damage, specifically holes, in the surfaces of a freight shipping container. This invention is a device that uses a robot to detect damage or holes in a container. The robot is able to move back and forth within the container and is equipped with a light sensor to detect the amount of light leaking into the container, as well as a distance sensor to measure the distance it has moved. The robot's movement and sensor readings are processed by a signal processing device, and the results are transmitted wirelessly to a display device on a table outside the container. The display device processes the received data and displays the location of any detected damage or holes on the container. The robot is able to move from the outside table into the container and back out again, and the display device and robot are connected via a wireless, bidirectional circuit using infrared rays. This allows the display device to communicate with the robot and give permission for the next transmission of data. In spite of the high-tech solutions this system is flawed. The wireless transmission of data between the robot and display device could be disrupted by interference or signal loss, leading to errors or incomplete data being displayed. Also, the robot may not accurately detect small or shallow holes in the container, especially if they are located on the bottom or sides of the container rather than the front surface.

Accordingly, it is desired to provide a system specifically to detect unwanted repeated impacts to the container.

This description provides a method for detecting unwanted repeated mechanical impacts on a container during regular hooking procedures performed by an operator using a quay crane. The method uses a spreader with a hooking mechanism and can be applied to all spreaders with the same design and operational principle. It involves receiving acceleration and position signals from sensors, which are processed by a monitoring system's CPU and compared to stored operational instructions in order to detect patterns of sudden changes in acceleration, indicating faulty hooking procedures. This allows for the identification of exact timestamps of initial and subsequent impacts on the container.

### SUMMARY OF THE INVENTION

The method for detecting repeated mechanical impacts to a container during its hooking procedures performed by a quay crane operator using a spreader with its hooking mechanism. The method is applicable for individual full handling cycles, from ship to shore and vice versa, for all conventional spreaders with hooking mechanisms of the same design and operational principle. The system includes a monitoring system with a processor that receives acceleration signals from a sensor and a digital gyroscope to determine the rate of acceleration and the normal operational position of the attached system in a 3D environment.

The acceleration signal is converted and filtered based on operational instructions stored in the memory module and represents patterns of sudden changes in the spreader's acceleration during the container hooking phase. This is used to detect initial faulty hooking procedures and subsequent secondary hooking procedures that may result in metal structure damage to the container and surrounding infrastructure. The resulting signals and events, including the number of impacts, associated accelerations, and timestamps, are stored in the memory module and sent to the monitoring system's User Interface (UI).

The system uses signal conversion rules that determine the start of the movement, its 3D position, and the initial pattern of the hooking phase based on instructions stored in the memory component and executable by the processor. The steps include filtering the signal, searching for peaks in the amplitudes of the filtered signal, determining threshold limits for potential impacts, and picking true impacts using a potential impact grouping technique. The repeated impacts detection rule is based on the oscillation amplitude of the primary impact being the largest and the repeated impacts having a close amplitude and following the primary shock.

The system includes a control unit with a processor that receives acceleration signals from the digital acceleration sensor and digital gyroscope and executes the instructions stored in the memory component. It also includes a conventional CPU connected to the control unit, sensors, and memory module, capable of performing the computational tasks with enough computational potential for excessive tasks. The monitoring system's UI and other server components are responsible for operational actions and decisions related to the handling procedure, operator, and container being examined.

### BRIEF DESCRIPTION OF DRAWINGS

FIG. 1: The hooking procedure (stages) when the first attempt fails.
FIG. 2: Upper side view of the container being hooked by the spreader.
FIG. 3: Repeated impacts detection method description as a process diagram.

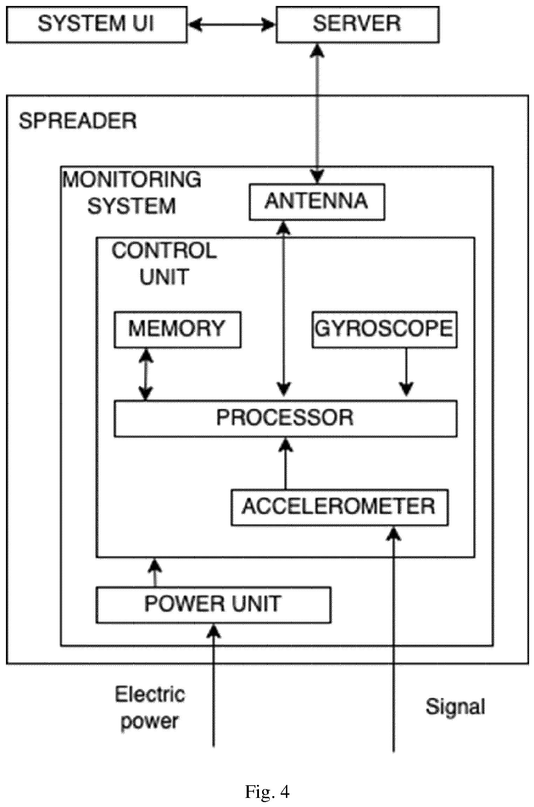

FIG. 4: Schematics of the monitoring system with the key elements.

### DETAILED DESCRIPTION OF THE INVENTION

The proposed invention represents a significant improvement at monitoring and maintaining container or the surrounding infrastructure. This system can be utilized in the field of logistics and transportation, specifically in container handling operations. The system is designed to monitor the movements and accelerations of containers during the hooking process, and to identify patterns of sudden changes in acceleration that indicate faulty hooking procedures. One of the key advantages of this system is improved safety. By detecting repeated mechanical impacts on containers, it helps to prevent damage to both the container and the crane, reducing the risk of accidents and increasing the overall safety of container handling operations. In addition to improved safety, the system also offers increased efficiency. By detecting faulty hooking procedures in real-time, the system helps to identify and rectify issues quickly, reducing downtime and increasing operational efficiency. This can result in significant cost savings for businesses involved in container handling operations. Another benefit of this system is the accurate data collection it provides. The system records and stores exact timestamps of initial and subsequent impacts, providing valuable data for further analysis and improvement of hooking procedures. This data can be used to optimize the hooking process and to develop better training programs for operators, ultimately leading to improved performance and increased efficiency. Finally, the system is versatile and can be applied to all spreaders with the same design and operational principle. This makes it a useful tool for monitoring container handling operations in a wide range of environments and settings.

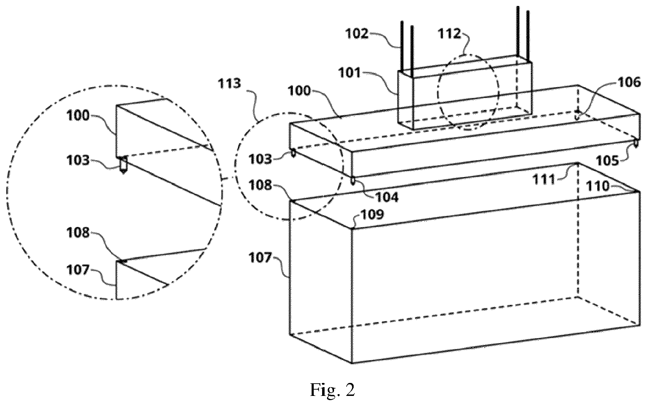

The whole hooking process with its elements is depicted in FIG. 2. In order to transport Container (107), a spreader is employed as a component of the crane. The spreader is composed of various fundamental components, including steel ropes (102) connecting it to the rest of the crane, the spreader body parts (100) and (102), and spreader elements (103, 104, 105, 106) that are utilized for hooking the container. Container (107) has structural elements (108, 109, 110, 111) that the spreader elements (103, 104, 105, 106) use to securely hook the container. The detailed view (113) displays the interaction between the spreader and the container, where the spreader element (103) must precisely enter the structural element (108) in the container, after which they are locked, allowing the container to be safely transported (a process referred to as "hooking").

However, there is a recurring problem with the hooking process: it is not always possible to insert all of the spreader elements (103, 104, 105, 106) into the container structural elements (108, 109, 110, 111) during the first attempt, leading to damage to both the container roof metal structure, the container structural elements (108, 109, 110, 111) and the spreader structural metal elements and the hooking elements (103, 104, 105, 106). To address this issue, a monitoring device is utilized to detect failed hookups, which is attached to the center area of the spreader (101), marked as (112). The device ensures that all spreader elements are correctly inserted into the container structural elements, preventing any damage and ensuring the safe transport of Container (107).

Before hooking the container, the spreader is positioned above the target container and moved towards it (200). Detection device (112) continuously monitors the movement of the spreader (203) during its working time (202). If the spreader elements (103) and (104) fail to insert into the container's hooking structural elements (108) and (109), the spreader structure (100) and elements (103) and (104) come into contact with the container body (107), resulting in the generation of mechanical vibrations (204) and (205) of amplitudes higher than normal at the points of contact. These vibrations are registered by device (112) as a signal of higher amplitude (206). If the hooking process is unsuccessful, the spreader is raised and lowered again towards container (207) and the procedure is repeated until successful hooking is achieved.

When the spreader elements (103) and (104) have been successfully inserted into the container structural elements (108) and (109), only the spreader structure (100) comes into contact with the container body (107). Since the spreader was not at a zero speed at the time of contact, mechanical vibrations (208) are generated at the point of contact. During this contact, the speed of the spreader is similar to that of the previous contact, so the device registers vibrations of similar amplitude (210).

Once the spreader is successfully hooked (and locked) with the container, the hooking process is considered complete. From this point forward, the device (112) starts analyzing the registered vibrations to detect the moments of contact (209) and (210). By continuously monitoring the spreader's movements and vibrations, the detection device (112) ensures that the hooking process is performed correctly and that the container is transported safely and securely.

The method and system depict critical impacts as events and treats them in the following manner. The resulting data of the events, namely the number of impacts, the associated acceleration, a 3D position and timestamps are then stored in the memory module and sent to the monitoring system's UI wirelessly with the help of a wireless communication module. The monitoring system's UI and other server components, excluded from this application, represent the type of information system, responsible for the operational actions and decisions of the exact handling procedure, exact operator of the crane and exact container that need to be examined.

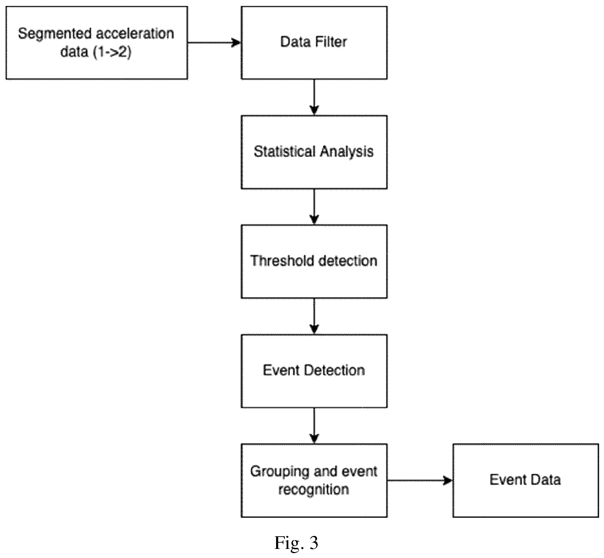

The signal conversion rules are executed by the system's CPU and stored in a memory component after initialization of the container handling cycle. The method further comprises determining the start of the movement, its 3D position and the initial pattern of the hooking phase based on instructions stored on the memory component and executable by the processor and depending on the type of the patterns of the acceleration signal. Furthermore, this signal conversion steps are visible in FIG. 3 and includes: filtering the signal, searching for the peaks of the amplitudes of the filtered signal, determining the threshold limits for potential impacts with their exclusion, picking up the true impacts by means of potential impacts grouping technique, determining the repeated true impacts.

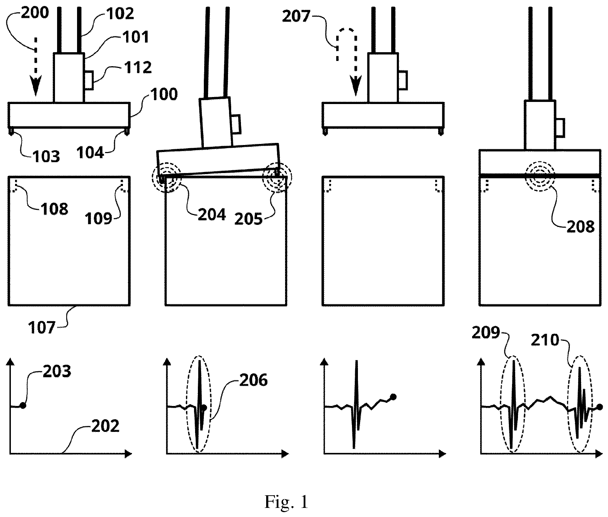

The repeated impacts detection steps are visible in FIG. 1 and are as follows: The oscillation amplitude of the primary impact of the vertical acceleration is the largest, the oscillation amplitude of the repeated impacts is close to the primary, repeated impacts follow the primary shock. For repeated impacts detection all maximum oscillation amplitudes of filtered acceleration signal are registered and grouped in the individual periods for each oscillation as a time-series event. Next, the event with the maximum oscillation amplitude is selected and considered as the primary impact. Potential repeated impacts are selected, whose maximum acceleration oscillation amplitudes exceed the set threshold limit. Finally, potential secondary impacts are detected and saved as repeated impacts that follow the primary impacts. This method is programed as logical instructions stored in the non-transitory memory component and executable by the processor to determine the presence of secondary impacts. The system includes a programmed control unit set up to receive, via the system's control unit's processor, the required acceleration signal (the rate of acceleration of the spreader mechanism towards the container, starting from its initial initialization) from a digital acceleration sensor, as well as the signal (the normal operational position of the attached system in the 3D environment) from the digital gyroscope. This control unit is set up to initiate the exact instructions stored in a memory component that can be executed by the processor. The system FIG. 2 includes CPU, dedicated to being used for computational purposes, connected to the control unit, the sensors which collect signals and the memory module, capable of performing the abovementioned computational tasks withing the given timeframes with enough computational potential for excessive tasks.

## Claims

1. A method for detecting repeated mechanical impacts comprising:
- collecting signals from sensors,
**characterized in that** it has the following step:
- recording, using at least accelerometer and gyroscope, the following parameters: a number of impacts, an associated acceleration, a 3D position, and timestamps.

2. The method according to claim 1, **characterized in that** it further comprises:
- storing signals to a memory module;
- sending signals to a CPU;
- using signal conversion rules, stored in the memory, component executing signals with CPU.

3. The method according to claim 1, wherein the signal conversion steps comprise of:
- filtering the signal;
- searching for peaks of amplitudes of the filtered signal;
- determining threshold limits for potential impacts with their exclusion;
- picking up the true impacts by means of potential impacts grouping method;
- determining the repeated true impacts.

4. The method according to claim 3, wherein determination of the repeated true impacts comprise of:
- determining which oscillation amplitude of the primary impact of the vertical acceleration is the largest;
- determining which oscillation amplitude of the repeated impacts is close to the primary;
- determining if repeated impacts follow the primary shock;
- registering and grouping all maximum oscillation amplitudes of the filtered acceleration signal in the individual periods for each oscillation as a time-series event;
- determining the event with the maximum oscillation amplitude as the primary impact;
- selecting potential repeated impacts, whose maximum acceleration oscillation amplitudes exceed the set threshold limit;
- detecting and saving potential secondary impacts as repeated impacts that follow the primary impacts.

5. The method according to any of the proceedings claims, wherein determining the start of the movement, its 3D position and the initial pattern of the hooking phase are based on steps, stored on the memory component and executable by the processor and depending on the type of the patterns of the acceleration signal.

6. A System for detecting repeated mechanical impacts according to method claims 1-5, **characterized in that** it comprises the following module:
a control unit that is configured to:
- indicate, using gyroscope, the normal operational position of the attached system in the 3D environment;
- indicate, using accelerometer, the rate of acceleration of the spreader mechanism towards the container, starting from its initial initialization;
- store, using memory module, associated accelerations and timestamps;
- execute, using a CPU, signal conversion steps.
